# EUROPÄISCHE PATENTSCHRIFT

(11) **EP 2 861 933 B1**
(45) Veröffentlichungstag und Bekanntmachung des Hinweises auf die Patenterteilung: **22.03.2017**
(21) Anmeldenummer: 13737531.7
(22) Anmeldetag: 28.05.2013
(51) Int. Cl.: F42B 19/00, H01M 6/38

(54) **VERSCHLUSSVORRICHTUNG FÜR EINEN DRUCKSPEICHER, TORPEDO MIT EINEM DRUCKSPEICHER UND EINER SOLCHEN VERSCHLUSSVORRICHTUNG FÜR DEN DRUCKSPEICHER SOWIE VERWENDUNG EINER SOLCHEN VERSCHLUSSVORRICHTUNG FÜR DEN VERSCHLUSS EINES DRUCKSPEICHERS EINES TORPEDOS**
CLOSING DEVICE FOR A PRESSURE ACCUMULATOR, TORPEDO WITH A PRESSURE ACCUMULATOR AND SAID CLOSING DEVICE FOR THE PRESSURE ACCUMULATOR AND USE OF SAID CLOSING DEVICE FOR THE CLOSURE OF A PRESSURE ACCUMULATOR OF A TORPEDO
DISPOSITIF DE FERMETURE POUR UN ACCUMULATEUR DE PRESSION, TORPILLE COMPORTANT UN ACCUMULATEUR DE PRESSION ET UN TEL DISPOSITIF DE FERMETURE POUR L'ACCUMULATEUR DE PRESSION, ET UTILISATION D'UN TEL DISPOSITIF DE FERMETURE POUR FERMER L'ACCUMULATEUR DE PRESSION D'UNE TORPILLE

(30) Priorität: 16.06.2012 DE 102012011988
(43) Veröffentlichungstag der Anmeldung: 22.04.2015
(73) Patentinhaber: ATLAS ELEKTRONIK GmbH, 28309 Bremen (DE)
(72) Erfinder: SLOTTA, Norbert, 21680 Stade (DE); STREITER, Bernd, 22880 Wedel (DE)
(74) Vertreter: Weidner Stern Jeschke
(86) Internationale Anmeldenummer: PCT/DE2013/100192
(87) Internationale Veröffentlichungsnummer: WO 2013/185752

(56) Entgegenhaltungen:
- FR-A- 825 050
- FR-A1- 2 270 685
- US-A- 2 798 111
- US-A- 5 601 309

## Beschreibung

Die Erfindung betrifft eine Verschlussvorrichtung für einen Druckspeicher gemäß dem Oberbegriff des Anspruchs 1, wie in FR2270685 A beschrieben. Die Erfindung betrifft außerdem gemäß Anspruch 13 einen Torpedo mit mindestens einem Druckspeicher zur Versorgung pneumatischer Einrichtungen und einer Verschlussvorrichtung für den Druckspeicher. Die Erfindung betrifft ferner gemäß Anspruch 14 die Verwendung einer Verschlussvorrichtung für den Verschluss eines Druckspeichers eines Torpedos. In einem Druckspeicher wird Arbeitsgas für pneumatisch betätigte Einrichtungen eingeschlossen. Eine Verschlussvorrichtung für den Druckspeicher umfasst dabei eine Eingangsseite zum Anschluss an den Druckspeicher, eine Ausgangsseite und ein Verschlusselement, welches eine fluidische Verbindung zwischen der Eingangsseite und der Ausgangsseite beherrscht. Über eine Betätigungseinrichtung der Verschlussvorrichtung kann auf das Verschlusselement eingewirkt werden und die Eingangsseite mit der Ausgangsseite fluidisch verbunden werden, sodass die an den Druckspeicher angeschlossenen pneumatischen Verbraucher betätigt werden.

Pneumatische Aktivierungen von Arbeitssystemen sind bspw. bei Torpedos vorgesehen, wobei durch Öffnen einer Verschlussvorrichtung eines Druckspeichers die jeweils an den Druckspeicher angeschlossenen Systeme des Torpedos bedarfsweise aktiviert werden. DE 195 37 683 C2 offenbart einen Außenluft unabhängigen Speicher für elektrische Energie zum Einsatz in einem Torpedo, welcher die für den elektrischen Antrieb des Torpedos benötigte Energie in dem Torpedo selbst bereitstellen soll. Der bekannte Energiespeicher umfasst eine Batteriezelle mit galvanischen Elementen, welche vor Aktivierung mit einem inerten Gas, nämlich Stickstoff, gefüllt ist. Für die Aktivierung der Batterie umfasst die bekannte Einrichtung einen Sauerstoff gefüllten Druckspeicher. Beim Aktivieren der Batterie wird durch ein externes Aktivierungssignal einer Steuereinrichtung ein Absperrventil des Druckspeichers geöffnet. Ein Druckminderer mindert den Druck des Sauerstoffs soweit, dass mit ihm eine Schneideinheit betätigt werden kann, welche eine Elektrolytflasche öffnet. Gleichzeitig wird der reduzierte Druck auf die Elektrolytflasche gegeben. Der unter dem Druck des Sauerstoffs stehende Elektrolyt wird aus der Elektrolytflasche in Kammern der einzelnen Batteriezellen gepresst.

Ober eine pneumatische Betätigung aus einem Druckspeicher können Arbeitssysteme rasch in Betrieb genommen werden, bspw. bei der bekannten Einrichtung die Batterie eines Torpedos mit Elektrolyt gefüllt werden und aktiviert werden.

Bei längerer Lagerung des Druckspeichers oder einer mit dem Druckspeicher ausgerüsteten Einrichtung stellen sich jedoch oft Druckverluste in dem Druckspeicher ein, sodass bei einem Öffnen der Verschlussvorrichtung nicht mehr genügend Druck zur Betätigung der angeschlossenen pneumatischen Verbraucher bereit gestellt ist. Insbesondere bei Torpedos muss jedoch auch nach sehr langen Lagerzeiten noch eine unmittelbare Einsatzbereitschaft gegeben sein. Es muss daher sichergestellt sein, dass bei einem Öffnen der Verschlussvorrichtung auch nach ggf. mehreren Jahren Lagerzeit des Torpedos der Arbeitsdruck im Druckspeicher gegeben ist.

Der vorliegenden Erfindung liegt das Problem zugrunde, auch nach mehrjähriger Lagerzeit den vorgesehenen Arbeitsdruck in einem Druckspeicher, insbesondere einem Druckspeicher in einem Torpedo, zu gewährleisten.

Das Problem wird erfindungsgemäß durch eine Verschlussvorrichtung für einen Druckspeicher mit den Merkmalen des Anspruchs 1 gelöst. Das Problem wird außerdem durch einen Torpedo mit mindestens einem Druckspeicher mit einer solchen Verschlussvorrichtung mit den Merkmalen des Anspruchs 14 gelöst. Das Problem wird ferner durch die Verwendung einer solchen Verschlussvorrichtung gemäß Anspruch 15 für den Verschluss eines Druckspeichers eines Torpedos gelöst.

Erfindungsgemäß ist das Verschlusselement der Verschlussvorrichtung eines Druckspeichers eine Verschlussmembran, wobei die Betätigungseinrichtung der Verschlussvorrichtung einen beweglich angeordneten Öffnungsdorn aufweist. Die Verschlussmembran liegt in dem Arbeitsweg des Öffnungsdorns, sodass der Öffnungsdorn bei einer Betätigung durch die Verschlussmembran gestoßen wird und somit eine fluidische Verbindung zwischen der Eingangsseite und der Ausgangsseite der Verschlussvorrichtung schafft. Die Verschlussmembran ist dabei hermetisch abgedichtet, ggf. über zusätzliche Dichtungsmittel, in der Verbindung zwischen der Eingangsseite und der Ausgangsseite der Verschlussvorrichtung angeordnet, sodass ein druckbeständiger und dauerhafter Verschluss des Druckspeichers gegeben ist. Die Verschlussmembran, der Öffnungsdorn und die Betätigungseinrichtung werden dabei derart dimensioniert, dass durch die Betätigung des Öffnungsdorns die Verschlussmembran sicher durchstoßen wird.

In einer vorteilhaften Ausführungsform der Erfindung ist die Verschlussmembran in einem Gehäuse der Verschlussvorrichtung angeordnet und trennt die Eingangsseite von der Ausgangsseite. Die Verschlussvorrichtung kann daher mit geringem Montageaufwand an den Druckspeicher angeschlossen werden und verschließt den Druckspeicher dauerhaft. Die Verschlussmembran ist in einer vorteilhaften Ausführungsform einteilig mit dem Gehäuse ausgebildet, sodass Undichtigkeiten ausgeschlossen sind. In einer weiteren vorteilhaften Ausführungsform ist die Verbindung zwischen der Eingangsseite und der Ausgangsseite der Verschlussvorrichtung als Verbindungsöffnung in dem Gehäuse ausgebildet, wobei die Verschlussmembran hermetisch abgedichtet auf dem Rand der Verbindungsöffnung befestigt ist.

In einer bevorzugten Ausführungsform der Erfindung ist die Verschlussmembran an einem in dem Gehäuse der Verschlussvorrichtung aufgenommenen Membranträger angeordnet. Der Membranträger wird als separates Bauteil derart in dem Gehäuse befestigt, dass die Verschlussmembran die Eingangsseite und die Ausgangsseite der Verschlussvorrichtung fluidisch trennt. Nach einer Betätigung der Verschlussvorrichtung und der dabei erfolgenden Zerstörung der Verschlussmembran kann die Verschlussmembran mit geringem Aufwand augetauscht werden und der Druckspeicher für eine Wiederverwendung neu mit Druckmittel befüllt werden. Vorteilhaft bildet dabei die Verschlussmembran eine Stirnseite des Membranträgers und verschließt einen Dorndurchtritt im Inneren des Membranträgers. Der Dorndurchtritt ist dabei eine Bohrung, welche bis Nahe der Stirnseite der Verschlussmembran reicht. Die Verschlussmembran kann dabei einteilig mit dem Membranträger ausgebildet sein. Bei der Fertigung des Membranträgers wird dabei der Dorndurchtritt ausgehend von einer der Verschlussmembran gegenüberliegenden Seite des Membranträgers ins Innere des Membranträgers eingearbeitet. Die verbleibende Wandstärke der Stirnseite ist dabei die Stärke der Verschlussmembran, welche mit der Öffnungskraft des Öffnungsdorns abgestimmt wird, so dass bei einer Betätigung der Verschlussvorrichtung der Öffnungsdorn die Verschlussmembran sicher durchstoßen kann.

In einer vorteilhaften Ausbildung der Erfindung weist das Gehäuse der Verschlussvorrichtung auf Höhe eines Mantels des Membranträgers eine Entlüftungsbohrung auf. Die Entlüftungsbohrung schließt dabei sicher aus, dass bei evtl. auftretenden Leckagen im Bereich der Verschlussmembran, bspw. nach längerer Lagerung der Verschlussvorrichtung, der Öffnungsdruck zu den angeschlossenen pneumatischen Verbrauchern durchgeschaltet wird und dadurch ungewollt die angeschlossenen pneumatischen Verbraucher aktiviert werden könnten. In einer weiteren vorteilhaften Ausführungsform der Erfindung ist zwischen dem Membranträger und dem Gehäuse eine Dichtung in einem Abschnitt des Mantels des Membranträgers angeordnet, welcher auf einer der Verschlussmembran angewandt liegenden Seite der Entlüftungsbohrung liegt. Auf diese Weise wird die Ausgangsseite der Verschlussvorrichtung fluidisch von der Entlüftungsbohrung getrennt, so dass eine ungewollte Entlüftung bei einem Durchtrennen der Verschlussmembran ausgeschlossen ist.

Vorteilhaft ist der Öffnungsdorn auf der Ausgangsseite der Verschlussvorrichtung angeordnet, wodurch die Verschlussvorrichtung als kompakte Baugruppe an den Anschlussstutzen eines Druckspeichers, bspw. einer Glasflasche, angeschlossen werden kann. In dem Druckspeicher ist ein unter statischem Druck stehendes Arbeitsgas, bspw. Stickstoff, bereitgestellt. Insbesondere wirkt die Anordnung des Öffnungsdorns auf der Ausgangsseite dem Mitreißen von Fragmenten oder Spänen der beim Öffnungsvorgang zerstörten Verschlussmembran entgegen. Die Verschlussmembran wird von dem Öffnungsdorn in Richtung der Eingangsseite gedrängt, wobei das freie Ende des Öffnungsdorns durch die Ebene der Verschlussmembran geführt ragt und verhindert, dass die Ränder der in der Verschlussmembran gebildeten Öffnung von dem statischen Druck auf der Eingangsseite wieder in Richtung ihrer Ausgangstage gedrückt werden.

Der Öffnungsdorn weist vorteilhaft mindestens eine der Verschlussmembran zugewandt liegende Spitze auf, wodurch das Durchstoßen der Verschlussmembran erleichtert ist. Die mindestens eine Spitze des Öffnungsdorns ist dabei derartig geformt, dass beim Durchstoßen der Verschlussmembran keine durch den Werkstoff der Verschlussmembran bedingten Späne gebildet werden. Dadurch wird ausgeschlossen, dass Späne der Verschlussmembran mit dem einsetzenden Fluidstrom aus dem Druckspeicher in die angeschlossenen pneumatischen Verbraucher mitgerissen werden.

In einer besonders vorteilhaften Ausführungsform der Erfindung ist am Umfang des Öffnungsdorns mindestens eine Nut ausgebildet, welche beim Durchstoßen der Verschlussmembran eine fluidische Verbindung zwischen der Eingangsseite und der Ausgangsseite der Verschlussvorrichtung schafft, wenn der Öffnungsdorn mit seinem Querschnitt die in der Verschlussmembran gebildete Öffnung teilweise verschließen sollte. Durch die Anordnung von Nuten am Umfang des Öffnungsdorns ist daher ein Öffnen der Verschlussvorrichtung auch ohne ein Zurückziehen des Öffnungsdorns möglich. Vorteilhaft sind dabei die Nuten in Bewegungsrichtung des Öffnungsdorns ausgebildet, sodass einerseits eine sichere fluidische Verbindung zwischen der Eingangsseite und der Ausgangsseite der Verschlussvorrichtung gebildet ist. Andererseits wird durch die Erstreckung der Nuten in Bewegungsrichtung des Öffnungsdorns eine Spanbildung beim Durchstoßen der Verschlussmembran verhindert, da eine Schneidwirkung der Kanten der Nut ausgeschlossen ist. Vorteilhaft sind mehrere Nuten in gleichmäßigen Abständen am Umfang des Öffnungsdorns angeordnet, wodurch der gesamte Durchtrittsquerschnitt für das Arbeitsgas erhöht ist. Zudem sind unabhängig von der Kontur der Durchstoßöffnung in der Verschlussmembran immer Durchtrittsquerschnitte gegeben, selbst wenn eine der Nuten durch die Kontur der Durchstoßöffnung in der Verschlussmembran für abgebogene Fragmente der Verschlussmembran versperrt sein sollte.

Vorteilhaft umfasst die Betätigungseinrichtung der Verschlussvorrichtung eine rotierend antreibbare und linear wirkende Stellspindel und eine auf der Stellspindel geführte Spindelmutter, welche den Öffnungsdorn trägt. Die Spindelmutter ist dabei an dem Gehäuse der Verschlussvorrichtung längs geführt, sodass die Rotationsbewegung der Stellspindel in eine lineare Arbeitsbewegung des Öffnungsdorns umgesetzt ist. Über den Spindeltrieb mit der Stellspindel und der auf der Stellspindel geführten Spindelmutter ist ein kraftvoller Antrieb des Öffnungsdorns gegeben, welcher ein sicheres Durchstoßen der Verschlussmembran gewährleistet.

In einer vorteilhaften Ausführungsform der Erfindung umfasst die Betätigungseinrichtung einen elektrischen Antriebsmotor, wobei die Stellspindel von dem Antriebsmotor angetrieben ist. Der Antriebsmotor stellt dabei die zum Durchstoßen der Verschlussmembran erforderliche Stellkraft zur Verfügung. Insbesondere kann der elektrische Antriebsmotor über das Anlegen der elektrischen Versorgung augenblicklich und zudem auch ggf. automatisch durch ein entsprechendes Steuersignal einer Steuereinrichtung in Betrieb genommen werden.

In einer besonders bevorzugten Ausführungsform der Erfindung ist der Öffnungsdorn in dem Gehäuse der Verschlussvorrichtung geführt, wobei im Bereich der Führung des Öffnungsdorns ortsfeste Positionssensoren am Gehäuse angeordnet sind, welche mit einem Positionsgeber am Umfang des Öffnungsdorns zusammenwirken. Der Positionsgeber ist dabei mit dem Öffnungsdorn beweglich, sodass durch die Positionssensoren die derzeitige Stellung des Öffnungsdorns erfasst werden kann. Der Positionsgeber ist in einer bevorzugten Ausführungsform ein Magnet. Die Positionssensoren sind dabei als Hall-Sensoren ausgebildet. Ein derartiger Hall-Sensor liefert dabei ein Signal in Abhängigkeit eines Magnetfeldes, dem er ausgesetzt ist, insbesondere des vorgenannten Magneten. Derjenige ortsfeste Positionssensor, dem der Magnet am Umfang des Öffnungsdorns gegenüberliegt und der daher von dem Magnet aktiviert ist, erzeugt ein Positionssignal, Es kann daher auch in eingebautem Zustand des Druckspeichers und der Verschlussvorrichtung bspw. in einem Torpedo, sicher die derzeitige Stellung der Verschlussvorrichtung erfasst werden, insbesondere festgestellt werden, ob die Verschlussmembran tatsächlich geöffnet ist.

In einer vorteilhaften Ausführungsform der Erfindung sind drei oder mehr Positionssensoren in einer Reihe angeordnet, wobei der mittlere Positionssensor einem Ruhezustand des Öffnungsdorns entspricht, und ein seitlich des mittleren Positionssensors angeordneter weiterer Positionssensor dem geöffneten Zustand der Verschlussvorrichtung entspricht. Der Ruhezustand ist dabei ein Zustand der Verschlussvorrichtung, in welchem die Verschlussmembran intakt ist und der Öffnungsdorn zum Durchstoßen der Verschlussmembran bereit gehalten ist.

Durch die Anordnung weiterer Positionssensoren auf derjenigen Seite des dem Ruhezustand entsprechenden Positionssensors, welche dem Positionssensor für die Öffnungsstellung der Verschlussvorrichtung entspricht, ist eine regelmäßige Prüfung der Funktionsfähigkeit der Positionssensoren möglich. Zur Prüfung der Funktionsfähigkeit wird der Öffnungsdorn in eine der Verschlussmembran entgegen gesetzten Bewegungsrichtung mittels des Spindeltriebs bewegt. Dabei spricht der für den Prüfbetrieb vorgesehene Positionssensor bei Gegenüberliegen des Magneten am Umfang des Öffnungsdorns an und signalisiert die Betriebsbereitschaft der Einrichtung.

Vorteilhaft ist die Spindelmutter an ihrem Umfang an dem Gehäuse der Verschlussvorrichtung geführt, wobei die Spindelmutter mit dem Gehäuse eine Kolben-Zylindereinheit bildet. Die Führung der Spindelmutter nach Art eines Kolbens gewährleistet eine sichere Führung des Öffnungsdorns. Vorteilhaft ist dabei am Umfang der Spindelmutter eine Dichtung angeordnet, wodurch mit einfachen Mitteln eine Abdichtung der Ausgangsseite der Verschlussvorrichtung gegeben ist,

Der Öffnungsdorn ist vorteilhaft in einem innerhalb des Gehäuses der Verschlussvorrichtung ausgebildeten Druckraum angeordnet, welcher eine Anschlussöffnung aufweist, wobei die Anschlussöffnung und die Verschlussmembran in winklig zueinanderstehenden Ebenen liegen. Beim Durchstoßen der Verschlussmembran ist daher ein gradliniges Durchströmen des Druckraums ausgeschlossen, sodass einem Mitreißen von Spänen zusätzlich entgegengewirkt ist.

Die Verschlussvorrichtung wird erfindungsgemäß für den Verschluss eines Druckspeichers eines Torpedos verwendet, sodass auch nach langer Lagerzeit des Torpedos die Verschlussmembran den Arbeitsdruck in dem Druckspeicher sicherstellt, Die Aktivierbarkeit von pneumatisch betätigbaren Einrichtungen des Torpedos ist daher unabhängig von der Lagerzeit, d.h. auch nach sehr langen Lagerzeiten, gegeben, da die Verschlussmembran den Druckspeicher hermetisch verschließt.

Ein Torpedo umfasst oft mehrere pneumatisch betätigbare bzw. pneumatisch aktivierbare Einrichtungen oder Systeme. Die pneumatischen Einrichtungen können dabei in einer Ausführungsform der Erfindung aus einem gemeinsamen Druckspeicher betätigt werden, welcher über eine erfindungsgemäße Verschlussvorrichtung während der Lagerzeit verschlossen ist und bedarfsweise geöffnet werden kann. In weiteren vorteilhaften Ausführungsformen sind jeder pneumatisch betätigbaren Einrichtung separate Druckspeicher zugeordnet, welche voneinander unabhängig geöffnet werden können. Dabei kann - abhängig von der jeweiligen Funktion der pneumatisch betätigbaren Einrichtung - eine entsprechend geschaltete sukzessive Inbetriebnahme oder Aktivierung der jeweiligen pneumatisch betätigbaren Einrichtung des Torpedos erfolgen.

In einer vorteilhaften Ausführungsform der Erfindung ist ein Druckspeicher mit der erfindungsgemäßen Verschlussvorrichtung ausgestattet, welcher zur Aktivierung einer Batterieeinheit oder einer Teilbatterie eines Torpedos an die ansprechenden pneumatisch betätigbaren Einrichtungen der Batterieeinheit angeschlossen ist. Dabei sind insbesondere den Betriebsstoffbehältern der Batterieeinheit, bspw. einem Elektrolytbehälter und/oder einem Kühlmittelbehälter, eine pneumatisch betätigbare Aktivierungseinrichtung zugeordnet. Diese Aktivierungseinrichtung umfasst in den bevorzugten Ausführungsformen der Erfindung eine pneumatisch betätigbare Schneideinheit. Nachdem die erfindungsgemäße Verschlussvorrichtung durch Betätigung des Öffnungsdorns geöffnet wird und damit das Arbeitsgas aus dem Druckspeicher austreten kann, wird das Schneidelement der Aktivierungseinrichtung betätigt und der Betriebsmittelbehälter geöffnet. Dadurch kann der Inhalt des jeweiligen Betriebsstoffbehälters der Batterieeinheit, nämlich ein Elektrolyt bzw. ein Kühlmittel, in den Batteriezellenblock geleitet werden. Bei einer Batterieeinheit wird der Innenraum des Betriebsstoffbehälters, welcher den Elektrolyten, bspw. eine Batterielauge, enthält, mit dem Druckspeicher, vorteilhaft unter Zwischenschaltung eines Druckminderers, verbunden. Nach dem Öffnen des Druckspeichers presst der freigesetzte und über den Druckminderer einstellbare Arbeitsdruck den Elektrolyten aus dem Betriebsstoffbehälter und drückt den Elektrolyten in die einzelnen Batteriezellen des Batteriezellenblocks.

In einer weiteren vorteilhaften Ausführungsform der Erfindung ist der Druckspeicher mit seiner erfindungsgemäßen Verschlussvorrichtung Teil einer Betätigung einer ausfahrbaren Funkantenne eines Torpedos. Ein solcher (fern-)gesteuerter Torpedo mit einer Antennensektion mit einer ausfahrbaren Funkantenne ist in DE 10 2009 040 152 A1 offenbart. Der bekannte Torpedo weist eine teleskopartig ausgebildete Funkantenne sowie Funkkommunikationseinrichtungen zum Senden und/oder Empfangen auf. Die Funkantenne weist eine derartige Länge auf, um auch in getauchtem Zustand des Torpedos die Wasseroberfläche erreichen zu können, um dabei eine Kommunikationsverbindung auszubauen und/oder Daten eines satellitengestützten Navigationssystems empfangen zu können. Mit einem Betätigungssystem für die teleskopartig ausgebildete Funkantenne, welches einen Druckspeicher und die erfindungsgemäße Verschlussvorrichtung für den Druckspeicher umfasst, wird die Teleskopantenne pneumatisch ausgefahren. Dabei wird nach dem Öffnen der Verschlussvorrichtung der Arbeitsdruck aus dem Druckspeicher auf den Teleskopzylinder der teleskopartig ausgebildeten Funkantenne geleitet, wodurch der Teleskopzylinder unter der Wirkung des Arbeitsdrucks des Druckspeichers ausfährt.

Weitere Merkmale der Erfindung ergeben sich aus den Unteransprüchen und den Ausführungsbeispielen, welche nachstehend anhand der Zeichnung näher erläutert sind. Es zeigen:
- Fig. 1: eine geschnittene Ansicht eines Ausführungsbeispiels einer Verschlussvorrichtung eines Drucksspeicher,
- Fig. 2.: einen Querschnitt des Öffnungsdorns gemäß II - II Fig. 1,
- Fig. 3: einen Querschnitt der Verschlussvorrichtung gemäß Fig. 1 in der geöffneten Stellung,
- Fig. 4: eine schematische Ansicht einer Batteriesektion eines Torpedos mit einer Verschlussvorrichtung gemäß Fig. 1 bis 3 und
- Fig. 5: eine geschnittene Ansicht einer Verschlussvorrichtung mit einer austauschbaren Verschlussmernbran.

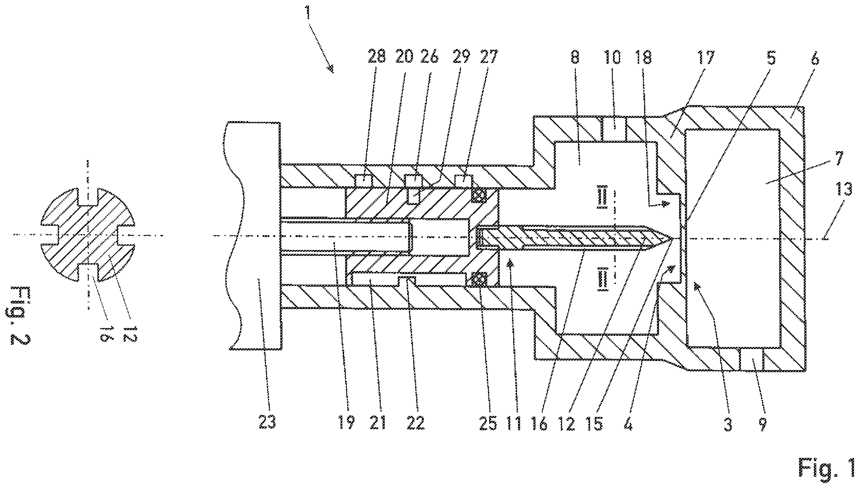

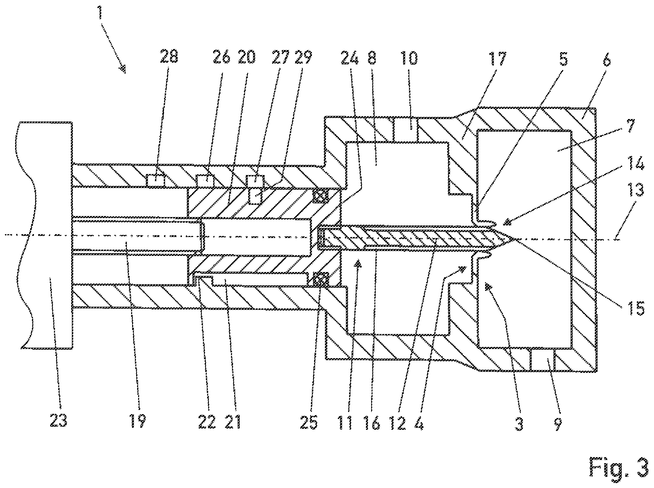

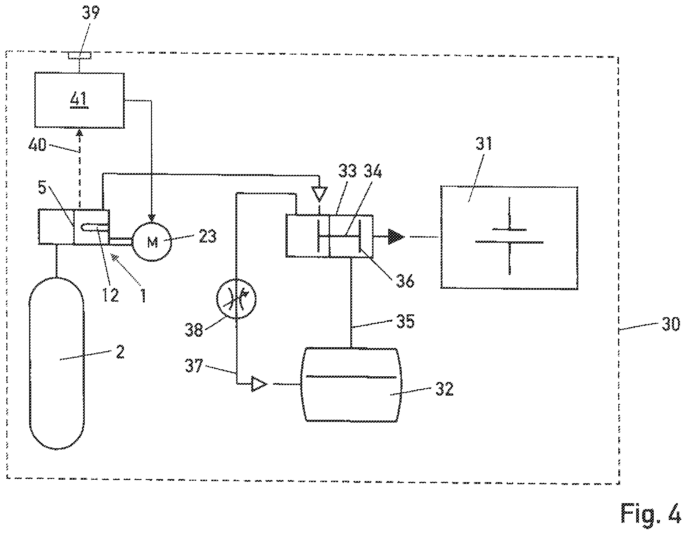

Fig. 1 und Fig. 3 zeigen jeweils einen Querschnitt durch eine Verschlussvorrichtung 1 für einen in Fig. 4 dargestellten Druckspeicher 2. In dem Druckspeicher 2 ist Stickstoff als Arbeitsgas zur Versorgung pneumatisch betätigbarer Einrichtungen unter statischem Druck eingeschlossen. Die Verschlussvorrichtung 1 verschließt den Druckspeicher druckfest und kann bei Bedarf geöffnet werden. Fig. 1 zeigt dabei die Verschlussvorrichtung 1 in der geschlossenen Stellung. Die geöffnete Stellung der Verschlussvorrichtung 1 ist in Fig. 3 dargestellt.

Die Verschlussvorrichtung 1 weist eine Eingangsseite 3 zum Anschluss an einen Druckspeicher 2 und eine Ausgangsseite 4 auf sowie ein Verschlusselement, welches eine Verbindung zwischen der Eingangsseite 3 und der Ausgangsseite 4 fluidisch beherrscht. Das Verschlusselement der Verschlussvorrichtung 1 ist eine Verschlussmembran 5, welche innerhalb eines Gehäuses 6 der Verschlussvorrichtung 1 einen der Eingangsseite 3 zugeordneten Eingangsraum 7 und einen der Ausgangsseite 4 zugeordneten Druckraum 8 trennt.

Das Gehäuse 6 weist auf der Eingangsseite 3 der Verschlussvorrichtung 1 eine Anschlussöffnung 9 auf, an die in Einbaulage der Verschlussvorrichtung 1 der Druckspeicher angeschlossen wird. Auf der Ausgangsseite 4 ist eine Anschlussöffnung 10 im Gehäuse 6 ausgebildet, an die pneumatische Verbraucher oder pneumatisch betätigbare Einrichtungen an die Verschlussvorrichtung 1 anschließbar ist.

Eine Betätigungseinrichtung 11 zur Einwirkung auf die Verschlussmembran 5 umfasst einen beweglich angeordneten Öffnungsdorn 12, in dessen Arbeitsweg die Verschlussmembran 5 liegt. Im gezeigten Ausführungsbeispiel ist der Öffnungsdorn 12 stabförmig ausgebildet und längs verschieblich in Richtung einer Längsachse 13 des Gehäuses 6 angeordnet. Mit dem Öffnungsdorn 12 wird zum Öffnen der Verschlussvorrichtung 1 die Verschlussmembran 5 durchstoßen. Diese Stellung der Verschlussvorrichtung 1 ist in Fig. 3 dargestellt, wobei der Öffnungsdorn 12 eine Öffnung 14 in der Verschlussmembran 5 herstellt, welche die Eingangsseite 3 mit der Ausgangsseite 4 der Verschlussvorrichtung 1 fluidisch verbindet.

Der Öffnungsdorn 12 weist an seinem freien Ende, d.h. der Verschlussmembran 5 zugewandt liegend, eine Spitze 15 auf, welche das Durchtrennen der Verschlussmembran 5 erleichtert und insbesondere der Bildung von Spänen beim Durchtrennen der Verschlussmembran 5 entgegenwirkt. Die Spitze 15 dringt während der Arbeitsbewegung des Öffnungsdorns 12 durch die Verschlussmembran 5 und weitet dabei die Öffnung 14 in der Verschlussmembran 5 auf. Der Öffnungsdorn 12 ist - wie in Fig. 2 im Querschnitt des Öffnungsdorns 12 zu sehen ist - im gezeigten Ausführungsbeispiel mit einem kreisförmigen Querschnitt ausgebildet, wobei am Umfang des Öffnungsdorns 12 mehrere Nuten 16 in Längsrichtung des Öffnungsdorns 12 ausgebildet sind.

Die Nuten 16 gewährleisten in der in Fig. 3 gezeigten Endstellung des Öffnungsdorns 12 eine fluidische Verbindung zwischen der Einlassseite 3 und der Auslassseite 4, sodass auch ohne ein Zurückziehen des Öffnungsdorns 12 ein Öffnen der Verschlussvorrichtung 1 möglich ist. Die gleichmäßig am Umfang des Öffnungsdorns 12 angeordneten Nuten 16 sorgen darüber hinaus beim Eindringen des Öffnungsdorns 12 in die Verschlussmembran und insbesondere beim Durchdringen der Verschlussmembran 5 für ein gleichmäßiges und gezieltes Abknicken von Randabschnitten der Öffnung 14 der Verschlussmembran 5. Auch bei einem Rückziehen des Öffnungsdorns 12 aus der in Fig. 3 gezeigten Endstellung wird daher ausgeschlossen, dass Randabschnitte der Öffnung 14 der durchstoßenen Verschlussmembran 5 abgerissen werden können und mit dem Volumenstrom durch die geöffnete Verschlussvorrichtung 1 mitgerissen werden.

Die Verschlussmembran 5 ist im gezeigten Ausführungsbeispiel ein verdünnter Abschnitt einer Zwischenwand 17 des Gehäuses 6, welche in dem Gehäuse 6 den Eingangsraum 7 von dem der Auslassseite 4 zugeordneten Druckraum 8 trennt. Die einteilige Ausführung der Verschlussmembran 5 und der Zwischenwand 17 gewährleistet einen hermetischen Verschluss eines Druckspeichers, welcher mit der Verschlussvorrichtung 1 ohne Druckverluste lange gelagert werden kann. Die Verschlussvorrichtung wird daher vorzugsweise für den Verschluss von Druckspeichern von Torpedos verwendet, welche oft längere Zeit gelagert werden und anschließend schnell einsatzbereit sein sollen.

In einem nicht gezeigten Ausführungsbeispiel ist die Verschlussmembran 5 an dem umlaufenden Rand einer Durchtrittsöffnung 18 der Zwischenwand 17 hermetisch abgedichtet befestigt, ggf. unter Anordnung zusätzlicher Dichtungsmittel. Die Wandstärke der Verschlussmembran 5 wird derart bemessen, dass die Verschlussmembran 5 einerseits dem vorgesehenen Arbeitsdruck im angeschlossenen Druckspeicher dauerhaft standhält und anderseits von dem Öffnungsdorn 12 sicher durchstoßen wird bei einer Betätigung des Öffnungsdorns 12.

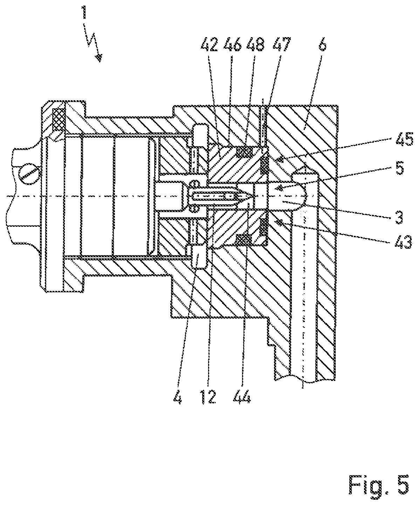

Fig. 5 zeigt einen geschnittenen Abschnitt einer Verschlussvorrichtung 1 mit einem Gehäuse 6, in welchem die Verschlussmembran 5 an einem Membranträger 42 angeordnet ist, Die Verschlussmembran 5 trennt dabei, wie bereits zu Fig. 1 und Fig. 3 beschrieben ist, die Eingangsseite 3 von der Ausgangsseite 4 der Verschlussvorrichtung 1.

Der Membranträger 42 ist im gezeigten Ausführungsbeispiel ein rotationssymmetrisch ausgebildetes Bauteil und in das Gehäuse 6 der Verschlussvorrichtung 1 derart eingeschoben, dass seine Stirnseite 43 eine Durchgangsöffnung zwischen der Eingangsseite 3 und der Ausgangsseite 4 verschließt. Die Verschlussmembran 5 bildet dabei die Stirnseite 43 des Membranträgers 42 und verschließt einen Dorndurchtritt 44 im Inneren des Membranträgers 42. Der Dorndurchtritt 44 ist eine zentrale Bohrung im Membranträger 42. In der gezeigten Einbaulage liegt der Membranträger 42 koaxial zum Öffnungsdorn 12, so dass der Öffnungsdorn 12 durch den Dorndurchtritt 44 mit Hilfe des Spindeltriebs in Richtung der Verschlussmembran 5 verschoben werden kann. Der Spindeltrieb umfasst dabei, wie bereits anhand von Fig. 1 und Fig. 3 beschrieben ist, insbesondere eine Stellspindel und eine Spindelmutter, um die Antriebsbewegung eines Antriebsmotors in eine lineare Stellbewegung des Öffnungsdorns 12 umzusetzen.

Der Membranträger 42 ist im gezeigten Ausführungsbeispiel einteilig mit der Verschlussmembran 5 ausgebildet, wobei die axiale Länge des zentralen Dorndurchtritts 44 die Wandstärke der Verschlussmembran 5 bestimmt. Der Dorndurchtritt 44 wird bei der Herstellung des Membranträgers 42 mit einer derartigen Tiefe ausgebildet, dass das im Bereich der Stirnseite 43 verbleibende Material die gewünschte Wandstärke der Verschlussmembran 5 bildet. In einem alternativen Ausführungsbeispiel ist die Verschlussmembran 5 als separates Bauteil an dem Membranträger 42 hermetisch abgedichtet befestigt.

Der Membranträger 42 wird von einer den Öffnungsdorn 12 umfassenden Baugruppe axial gegen den Grund des Gehäuses 6 verspannt, wobei der Membranträger 42 mit der Verschlussmembran 5 die Eingangsseite 3 der Verschlussvorrichtung 1 fluidisch abdichtet. Im Bereich der Stirnseite 43 des Membranträgers 42 ist zur Verbesserung der Abdichtung der Eingangsseite 3 eine Dichtung 45 angeordnet, bspw. ein O-Ring.

Durch die Anordnung der Verschlussmembran 5 an einem Membranträger 42 kann die Verschlussmembran nach einem Betätigungsvorgang der Verschlussvorrichtung 1, wobei die Verschlussmembran 5 zerstört wird, mit geringem Aufwand getauscht werden. Der Membranträger 42 ist nämlich ein separates Bauteil im Gehäuse 6. Der Membranträger 42 wird mit der zerstörten Verschlussmembran 5 aus dem Gehäuse 6 entfernt und anschließend ein neuer Membranträger 42 mit einer intakten Verschlussmembran 5 in das Gehäuse 6 eingesetzt.

Das Gehäuse 6 weist auf Höhe eines Mantels 46 eine Entlüftungsbohrung 47 auf. Sofern nach längerer Lagerzeit der Verschlussvorrichtung ggf. Undichtigkeiten im Bereich der Verschlussmembran 5 zeigen, so wird durch die Entlüftungsbohrung 47 ein Gasübertritt von der Eingangsseite 3 zur Ausgangsseite 4 und damit eine ungewollte Aktivierung der an die Verschlussvorrichtung 1 angeschlossenen pneumatischen Systeme verhindert. Der Membranträger 42 trägt auf seinem Mantel einen umlaufenden O-Ring 48, so dass zwischen dem Membranträger 42 und dem Gehäuse 6 eine umlaufende Dichtung gegeben ist. Der O-Ring 48 liegt dabei in einem Abschnitt des Mantels 46 des Membranträgers 42, welcher auf einer der Verschlussmembran 5 abgewandt liegenden Seite der Entlüftungsbohrung 47 liegt. Der O-Ring 48 schließt dabei eine fluidische Verbindung zwischen der Ausgangsseite 4 der Verschlussvorrichtung 1 und der Entlüftungsbohrung 47 aus. Nach einem Durchtrennen der Verschlussmembran 5 durch den Öffnungsdorn 12 werden durch den O-Ring 48 Druckverluste über die Entlüftungsbohrung 47 verhindert.

Die Betätigungseinrichtung 11 umfasst eine rotierend antreibbare Stellspindel 19 und eine Spindelmutter 20, welche den Öffnungsdorn 12 trägt, Die Spindelmutter 20 wirkt über ein Innengewinde mit der Stellspindel 19 zusammen. Die Spindelmutter 20 ist zudem in einem zylindrischen Abschnitt des Gehäuses 6 längs geführt, nämlich durch eine in Bewegungsrichtung ausgebildete Führungsnut 21, in der ein Gleitstein 22 die translatorische Bewegung sichert. Im gezeigten Ausführungsbeispiel ist die Führungsnut 21 am Umfang der Spindelmutter 20 ausgebildet. Der Gleitstein 22, welcher in Einbaulage der Spindelmutter 20 in die Führungsnut 21 eingreift, ist im gezeigten Ausführungsbeispiel Teil des zylindrischen Abschnitts des Gehäuses 6. Der Gleitstein 22, welcher in der Führungsnut 21 beweglich ist, synchronisiert die Drehbewegung der Stellspindel 19 mit der linearen Bewegung der Spindelmutter 20.

Die Betätigungseinrichtung 11 umfasst ferner einen elektrischen Antriebsmotor 23, welcher an dem Gehäuse 6 der Verschlussvorrichtung 1 befestigt ist und die Stellspindel 21 antreibt.

Der Öffnungsdorn 12 ist auf einer der Verschlussmembran 5 zugewandt liegenden Stirnseite 24 der Spindelmutter 20 befestigt, nämlich im Ausführungsbeispiel gemäß Fig. 1 bis 3 als separates Bauteil eingeschraubt.

Über die Führung der Spindelmutter 20 an ihrem Umfang ist auch eine Führung des an der Spindelmutter 20 gehaltenen Öffnungsdorns 12 in dem Gehäuse 6 der Verschlussvorrichtung 1 gegeben.

Der Öffnungsdorn 12 ist in dem der Auslassseite 4 zugeordnetem Druckraum angeordnet. Eine druckfeste Abdichtung des Druckraums 8 ist durch eine am Umfang der Spindelmutter 20 angeordnete Dichtung gegeben, welche im gezeigten Ausführungsbeispiel ein Dichtungsring 25 ist. Die Anschlussöffnung 10 des Druckraums 8 und die Verschlussmembran 5 liegen in jeweiligen Ebenen, welche zueinander winklig stehen. Dadurch ist die Druckübertragung gewährleistet und zudem das Arbeitsgas in einem winkligen Weg durch den Druckraum 8 geleitet, wodurch die Gefahr des Abreißens von Spänen aus der durchstoßenen Verschlussmembran 5 reduziert ist.

Im Bereich der Führung der Spindelmutter 20 sind mehrere ortsfeste, beispielsweise als Hall-Sensoren ausgebildete, Positionssensoren 26, 27, 28 angeordnet, welche mit einem am Umfang der Spindelmutter 20 angeordneten Magneten 29 zusammenwirken und jeweils ein Signal in Abhängigkeit des von ihnen detektierten Magnetfeldes des Magneten 29 liefern.

Anstelle eines Magneten 29 sind in weiteren Ausführungsbeispielen andere Positionsgeber am Umfang der Spindelmutter 20 angeordnet, auf welche entsprechend angepasst ausgebildete Positionssensoren 26, 27, 28 ansprechen.

Die als Hall-Sensoren ausgebildeten Positionssensoren 26, 27, 28 sind in einer Reihe in Längsrichtung, d.h. in Richtung der Längsachse 13 der Verschlussvorrichtung 1, angeordnet. Spricht einer der Positionssensoren in der Gegenwart des Magneten 29 an, so kann daraus unmittelbar ein Ruckschluss auf die Stellung des Öffnungsdorns 12 gezogen werden, da der Magnet 29 über die Spindelmutter 20 mit dem Öffnungsdorn 12 bewegt wird.

Im gezeigten Ausführungsbeispiel sind drei Positionssensoren 26, 27, 28 in einer Reihe angeordnet, wobei der mittlere Positionssensor 26 dem Ruhezustand der Verschlussvorrichtung 1 entspricht, welcher in Fig. 1 dargestellt ist. In der Ruhestellung trennt die Verschlussmembran 5 die Einlassseite 3 von der Auslassseite 5 der Verschkissvorrichtung 1, während der Öffnungsdorn 12 für ein Durchstoßen der Verschlussmembran 5 bereitgehalten ist. Der in der Reihe der Positionssensoren 26, 27, 28 der Verschlussmembran 5 am nächsten liegende Positionssensor 27 entspricht der Öffnungsstellung der Verschlussvorrichtung 1, welche in Fig. 3 dargestellt ist, wobei der Öffnungsdorn 12 die Verschlussmembran 5 durchragt. Durch Auswertung der Signale der Positionssensoren 26, 27, 28 kann ohne Öffnen des Gehäuses 6 der Verschlussvorrichtung sicher detektiert werden, in welcher Stellung sich der Öffnungsdorn 12 befindet, insbesondere, ob die Verschlussvorrichtung 1 nach einer Betätigung tatsächlich in die geöffnete Stellung überführt ist und die Verschlussmembran 5 durchstoßen ist. Hierzu sind die Positionssensoren 26, 27, 28 extern auslesbar, bspw. in Einbaulage der Verschlussvorrichtung in einem Torpedo über eine Schnittstelle 39 (Fig. 4) an der Außenhülle des Torpedos.

Der dritte Positionssensor 28, welcher bezüglich des mittleren Positionssensors 26 abseits der Verschlussmembran 5 angeordnet ist, ermöglicht einen Prüfbetrieb der Verschlussvorrichtung, wobei die Betätigungseinrichtung 11 entgegen der Arbeitsrichtung zum Durchstoßen der Verschlussmembran 5 angetrieben wird. Entsprechend wird im Prüfbetrieb die Stellspindel 19 von dem Antriebsmotor 23 in entgegen gesetzter Drehrichtung angetrieben, sodass der Öffnungsdorn 12 nicht in Richtung auf die Verschlussmembran 5 verschoben wird, sondern vielmehr die Spindelmutter 12 mit dem Öffnungsdorn 12 ins Innere des zylindrischen Abschnitts des Gehäuses 6 eingezogen wird. Sobald der Magnet 29 am Umfang der Spindelmutter 20 dem dritten Positionssensor 28 gegenüberliegt, kann aus einem entsprechenden Signal des Positionssensors 28 auf die Funktionsfähigkeit der Betätigungseinrichtung 11 geschlossen werden.

Fig. 4 zeigt eine Torpedosektion eines sektionsweise aufgebauten Torpedos, nämlich im Ausführungsbeispiel eine Batteriesektion 30. Die Batteriesektion 30 umfasst eine Batterie 31, welche nach der Aktivierung des Torpedos der Versorgung seiner elektrischen Systeme dient Zur Aktivierung der Batterie 31 wird unter anderem ein Elektrolyt in die Batterie 31 gepresst, welcher während der Lagerung des Torpedos in einem Elektrolytbehälter 32 vorgehalten wird.

Zur Förderung des Elektrolyts in die Batterie 31 wird der Elektrolytbehälter 32 pneumatisch betätigt. Hierfür ist in der Batteriesektion 30 des Torpedos ein Druckspeicher 2, nämlich eine Gasflasche mit einem komprimierten Gasvorrat, vorgesehen. Der Druckspeicher 2 ist mit einer Verschlussvorrichtung 1 gemäß Fig, 1 bis 3 verschlossen. Wie bereits beschrieben befindet sich die Verschlussvorrichtung 1 vor der Aktivierung in der Ruhestellung, in welcher der Druckspeicher 2 hermetisch abgedichtet ist. Der Antriebsmotor, mit dem der Öffnungsdorn 12 betätigt werden kann, ist elektrisch betätigbar. Sobald der Öffnungsdorn 12 die Verschlussmembran 5 durchstößt, wird die pneumatische Beaufschlagung des Elektrolytbehälters 32 in die Wege geleitet. Dabei ist dem Elektrolytbehälter 32 eine pneumatisch betätigbare Kolben-/Zylindereinheit 33 vorgeschaltet. Das Stellglied 34 der Kolben-/Zylindereinheit 33 und die vom Stellglied 34 schaltbaren Anschlüsse der Kolben-/Zylindereinheit 33 sind dabei derart ausgebildet, dass zunächst die hydraulische Verbindung zwischen dem Elektrolytbehälter 32 und der Batterie 31 freigegeben wird.

Erst nach dem Öffnen der hydraulischen Zuleitung 35 wird der Elektrolytbehälter 32 mit Druck beaufschlagt, um das Elektrolyt auszuschieben. Nachdem das Messer 36 die Zuleitung 35 geöffnet hat, verbindet das Stellglied 34 auf seinem weiteren Öffnungsweg eine Druckleitung 37 des Elektrolytbehälters 32 mit dem Druckspeicher 2. In der Druckleitung 37 ist ein Druckminderer 38 angeordnet, welcher den Arbeitsdruck im Druckspeicher 2, bspw. 200 bar, auf einen Elektrolytdruck von etwa 5-6 bar reduziert.

Dabei ist der Rand des Stellglieds 34 im Bereich der Zuleitung 35 vom Elektrolytbehälter 32 scharfkantig ausgestaltet bzw. als Messer 36 ausgebildet. Bei der pneumatisch betätigten Bewegung des Stellglieds 34 entfernt das Messer 36 einen Verschluss, bspw. eine Kappe, welche im passiven Zustand, d.h. im Lagerzustand des Torpedos, die Zuleitung 35 abdichtet.

Die Zuleitung elektrischer Energie für den Antriebsmotor 23 erfolgt über eine Schnittstelle 39 an der Außenhülle der Batteriesektion 30. Im Aktivierungsbetrieb wird der Antriebsmotor 23 derart angesteuert, dass die Stellspindel 19 den Öffnungsdorn 12 durch die Verschlussmembran 5 treibt, sodass eine pneumatische Aktivierung der an den Druckspeicher 2 angeschlossenen Systeme des Torpedos erfolgt.

Über die Schnittstelle 39 sind auch die Positionssignale 40 der Positionssensoren 26, 27, 28 (Fig. 1) übertragbar, sodass ohne Öffnen des Torpedos die Stellung der Verschlussvorrichtung 5 geprüft werden kann. Im Rahmen einer turnusmäßigen Wartung ist dabei auch ein Testbetrieb durchführbar, bei dem der Antriebsmotor 23 in der entgegen gesetzten Drehrichtung als beim Aktivierungsbetrieb und Öffnen der Verschlussvorrichtung 1 angetrieben wird.

In einem weiteren Ausführungsbeispiel ist in der Batteriesektion 30 eine der Schnittstelle 39 zugeordnete Auswertungseinheit 41 vorgesehen, welche die Positionssignale 40 der Verschlussvorrichtung 1 verarbeitet und über die Schnittstelle 39 ansteuerbar ist.

Der Torpedo enthält in vielen Ausführungsbeispielen weitere pneumatisch betätigbare Einrichtungen oder Systeme, deren jeweiliger Druckspeicher bei der Aktivierung geöffnet wird. Auch diesen Druckspeichern ist eine erfindungsgemäße Verschlussvorrichtung 1 gemäß Fig. 1 bis Fig. 3 bzw. Fig. 5 zugeordnet, sodass der Torpedo auch nach längerer Lagerzeit sofort und sicher einsatzbereit ist.

In einem weiteren vorteilhaften Ausführungsbeispiel eines Torpedos umfasst der Torpedo eine pneumatisch betätigbare Einrichtung zum Ausfahren einer teleskopartig ausgebildeten Funkantenne. Ein Teleskopzylinder der teleskopartig ausfahrbaren Funkantenne des Torpedos wird aus einem Druckspeicher versorgt, welcher mit einer in den Fig. 1 bis 3 beschriebenen Verschlussvorrichtung 1 verschlossen wird. Sobald der Öffnungsdorn 12 der Verschlussvorrichtung die Verschlussmembran 5 durchstößt und damit das Arbeitsgas aus dem Druckspeicher freisetzt, wird der Arbeitsdruck zum Druckraum des Teleskopzylinders der Funkantenne durchgeschaltet, sodass die Funkantenne aus dem Torpedo ausgefahren wird. Der Teleskopzylinder hat dabei eine derartige Länge und besteht aus einer entsprechenden Anzahl von ineinandergeschobenen Teleskoprohren, dass die Funkantenne bei einer Fahrt des Torpedos nahe der Wasseroberfläche die Wasseroberfläche durchstoßen kann. Der Torpedo kann über die ausgefahrene Funkantenne eine Funkverbindung zu einer externen Trägerplattform aufnehmen oder bspw. über GPS Navigationsinformation empfangen, welche seiner Steuereinheit zugeführt und bei der Navigation zugrunde gelegt wird.

## Patentansprüche

1. Verschlussvorrichtung für einen Druckspeicher (2), mit einer Eingangsseite (3) zum Anschluss an einen Druckspeicher (2), einer Ausgangsseite (4) und einem Verschlusselement, welches eine Verbindung zwischen der Eingangsseite (3) und der Ausgangsseite (4) fluidisch beherrscht, sowie mit einer zur Einwirkung auf das Verschlusselement ausgebildeten Betätigungseinrichtung (11),
wobei das Verschlusselement eine Verschlussmembran {5} und die Betätigungseinrichtung (11) einen beweglich angeordneten Öffnungsdorn (12) aufweist, in dessen Arbeitsweg die Verschlussmembran (5) liegt,
**dadurch gekennzeichnet, dass**
die Verschlussmembran (5) in einem Gehäuse (6) der Verschlussvorrichtung (1) angeordnet ist und einen der Eingangsseite (3) zugeordneten Eingangsraum (7) und einen der Ausgangsseite (4) zugeordneten Druckraum (8) innerhalb des Gehäuses (6) trennt, wobei die Verschlussmembran (5) eine Durchtrittsöffnung (18) in einer Zwischenwand (17) des Gehäuses (6) hermetisch abdichtet.

2. Verschlussvorrichtung nach Anspruch 1,
**dadurch gekennzeichnet, dass**
die Verschlussmembran (5) an einem in dem Gehäuse (6) aufgenommenen Membranträger (42) angeordnet ist, wobei die Verschlussmembran (5) eine Stirnseite (43) des Membranträgers (42) bildet und einen Dorndurchtritt (44) im Inneren des Membranträgers (42) verschließt.

3. Verschlussvorrichtung nach Anspruch 2,
**dadurch gekennzeichnet, dass**
das Gehäuse (6) auf Höhe eines Mantels (46) des Membranträgers (42) eine Entlüftungsbohrung (47) aufweist, wobei zwischen dem Membranträger (42) und dem Gehäuse (6) eine Dichtung (48) in einem Abschnitt des Mantels (46) des Membranträgers (42) angeordnet ist, welcher auf einer der Verschlussmembran (5) abgewandt liegenden Seite der Entlüftungsbohrung (47) liegt.

4. Verschlussvorrichtung nach einem der vorhergehenden Ansprüche,
**dadurch gekennzeichnet, dass**
der Öffnungsdorn (12) auf der Ausgangsseite (4) der Verschlussvorrichtung (1) angeordnet ist.

5. Verschlussvorrichtung nach einem der vorhergehenden Ansprüche,
**dadurch gekennzeichnet, dass**
der Öffnungsdorn (12) mindestens eine der Verschlussmembran (5) zugewandt liegenden Spitze (15) aufweist.

6. Verschlussvorrichtung nach einem der vorgehenden Ansprüche
**dadurch gekennzeichnet, dass**
am Umfang des Öffnungsdorns (12) mindestens eine Nut (16) ausgebildet ist, wobei die Nut (16) oder die Nuten (16) in Bewegungsrichtung des Öffnungsdorns (12) ausgebildet sind, wobei im Falle mehrerer Nuten (16) die Nuten in gleichmäßigen Abständen
am Umfang des Öffnungsdorns (12) angeordnet sind.

7. Verschlussvorrichtung nach einem der vorhergehenden Ansprüche,
**dadurch gekennzeichnet, dass**
die Betätigungseinrichtung (11) eine rotierend antreibbare Stellspindel (19) und eine mit der Stellspindel (19) zusammenwirkende Spindelmutter (20) umfasst, welche längs geführt ist und den Öffnungsdorn (12) trägt,
wobei die Spindelmutter (20) an dem Gehäuse (6) der Verschlussvorrichtung (1) längs geführt ist.

8. Verschlussvorrichtung nach Anspruch 7,
**dadurch gekennzeichnet, dass**
die Betätigungseinrichtung (11) einen elektrischen Antriebsmotor (23) umfasst, wobei die Stellspindel (19) von dem Antriebsmotor (23) angetrieben ist.

9. Verschlussvorrichtung nach einem der vorhergehenden Ansprüche,
**dadurch gekennzeichnet, dass**
der Öffnungsdorn (12) in dem Gehäuse (6) der Verschlussvorrichtung (1) geführt ist, wobei im Bereich der Führung des Öffnungsdorns (12) Positionssensoren (26, 27, 28) ortsfest am Gehäuse (6) angeordnet sind, welche mit einem mit dem Öffnungsdorn (12) beweglichen Positionsgeber zusammenwirken, wobei der Positionsgeber ein Magnet (29) ist und die Positionssensoren (26, 27, 28) Hall-Sensoren sind.

10. Verschlussvorrichtung nach Anspruch 9,
**dadurch gekennzeichnet, dass**
drei Positionssensoren (26, 27, 28) in einer Reihe angeordnet sind, wobei der mittlere Positionssensor (26) einem Ruhezustand der Verschlussvorrichtung (1) mit intakter Verschlussmembran (5) entspricht.

11. Verschlussvorrichtung nach einem der Ansprüche 7 bis 10,
**dadurch gekennzeichnet, dass**
die Spindelmutter (20) an ihrem Umfang an dem Gehäuse (6) geführt ist, wobei am Umfang der Spindelmutter (20) eine Dichtung angeordnet ist, wobei die Dichtung ein umlaufender Dichtungsring (25) ist.

12. Verschlussvorrichtung nach einem der vorhergehenden Ansprüche,
**dadurch gekennzeichnet, dass**
der Öffnungsdom (12) in dem Druckraum (8) angeordnet ist, welcher eine Anschlussöffnung (9,10) aufweist, wobei die Anschlussöffnung (9,10) und die Verschlussmembran (5) in winklig zueinanderstehenden Ebenen liegen.

13. Torpedo mit mindestens einem Druckspeicher (2) zur Versorgung pneumatisch betätigter Einrichtungen des Torpedos und mit einer Verschlussvorrichtung (1) für den Druckspeicher (2) gemäß einem der vorhergehenden Ansprüche.

14. Verwendung einer Verschlussvorrichtung nach einem der Ansprüche 1 bis 12 für den Verschluss eines Druckspeichers (2) eines Torpedos.

## Claims

1. Closing device for a pressure accumulator (2), with an inlet side (3) for connection to a pressure accumulator (2), an outlet side (4) and a closing element, which fluidically controls a connection between the inlet side (3) and the outlet side (4), as well as an actuation element (11) formed to act on the closing element, wherein the closing element has a closing membrane (5) and the actuation element (11) has a movably disposed opening pin (12), in the operating path of which the closing membrane (5) lies, **characterised by** that the closing membrane (5) is arranged in a housing (6) of the closing device (1) and separates an inlet space (7) associated with the inlet side (3) and a pressure space (8) associated with the outlet side (4) inside the housing (6), wherein the closing membrane (5) hermetically seals off a through opening (18) in an intermediate wall (17) of the housing (6).

2. Closing device according to claim 1, **characterised by** that the closing membrane (5) is arranged on a membrane support (42) taken up in the housing (6), wherein the closing membrane (5) forms an end face (43) of the membrane support (42) and closes a pin passage (44) in the interior of the membrane support (42).

3. Closing device according to claim 2, **characterised by** that the housing (6) has a ventilation hole (47) at the level of a jacket (46) of the membrane support (42), wherein a seal (48) is arranged in a section of the jacket (46) of the membrane support (42) between the membrane support (42) and the housing (6), which section lies on a side of the ventilation hole (47) facing away from the closing membrane (5).

4. Closing device according to one of the preceding claims, **characterised by** that the opening pin (12) is arranged on the outlet side (4) of the closing device (1).

5. Closing device according to one of the preceding claims, **characterised by** that the opening pin (12) has at least one point (15) lying facing the closing membrane (5).

6. Closing device according to one of the preceding claims, **characterised by** that at least one groove (16) is formed on the circumference of the opening pin (12), wherein the groove (16) or the grooves (16) are formed in the movement direction of the opening pin (12), wherein in the case of several grooves (16), the grooves are arranged at uniform spacings on the circumference of the opening pin (12).

7. Closing device according to one of the preceding claims, **characterised by** that the actuation element (11) comprises an adjusting spindle (19) that can be driven in a rotating manner and a spindle nut (20) that interacts with the adjusting spindle (19), which nut is guided longitudinally and supports the opening pin (12), wherein the spindle nut (20) is guided longitudinally on the housing (6) of the closing device (1).

8. Closing device according to claim 7, **characterised by** that the actuation element (11) comprises an electric drive motor (23), wherein the adjusting spindle (19) is driven by the drive motor (23).

9. Closing device according to one of the preceding claims, **characterised by** that the opening pin (12) is guided in the housing (6) of the closing device (1), wherein in the area of the guiding of the opening pin (12), position sensors (26, 27, 28) are arranged fixedly on the housing (6), which sensors interact with a position transmitter that is movable with the opening pin (12), wherein the position transmitter is a magnet (29) and the position sensors (26, 27, 28) are Hall sensors.

10. Closing device according to claim 9, **characterised by** that three position sensors (26, 27, 28) are arranged in a row, wherein the middle position sensor (26) corresponds to a resting state of the closing device (1) with intact closing membrane (5).

11. Closing device according to one of claims 7 to 10, **characterised by** that the spindle nut (20) is guided on its circumference on the housing (6), wherein a seal is arranged on the circumference of the spindle nut (20), wherein the seal is a circumferential sealing ring (25).

12. Closing device according to one of the preceding claims, **characterised by** that the opening pin (12) is arranged in the pressure space (8), which has a connection opening (9, 10), wherein the connection opening (9, 10) and the closing membrane (5) lie in planes that are at an angle to one another.

13. Torpedo with at least one pressure accumulator (2) for supplying pneumatically actuated devices of the torpedo and with a closing device (1) for the pressure accumulator (2) according to one of the preceding claims.

14. Use of a closing device according to one of claims 1 to 12 for closing a pressure accumulator (2) of a torpedo.

## Revendications

1. Dispositif de fermeture pour un accumulateur de pression (2), présentant un côté entrée (3) destiné à être raccordé à l'accumulateur de pression (2), un côté sortie (4) et un élément de fermeture qui commande fluidiquement une liaison entre le côté entrée (3) et le côté sortie (4), présentant également un dispositif d'actionnement (11) conçu pour agir sur l'élément de fermeture,
l'élément de fermeture présentant une membrane de fermeture (5) et le dispositif d'actionnement (11) présentant un éperon d'ouverture (12) disposé de manière mobile et dans la course de travail duquel se trouve la membrane de fermeture (5),
**caractérisé en ce que**
la membrane de fermeture (5) est disposée dans un boîtier (6) du dispositif de fermeture (1) et sépare, dans le boîtier (6), une chambre d'entrée (7) du côté entrée (3) et une chambre de pression (8) du côté sortie (4), la membrane de fermeture (5) fermant hermétiquement une ouverture traversante (18) dans une paroi intermédiaire (17) du boîtier (6).

2. Dispositif de fermeture selon la revendication 1,
**caractérisé en ce que**
la membrane de fermeture (5) est disposée sur un support de membrane (42) inclus dans le boîtier (6), la membrane de fermeture (5) formant une face avant du support de membrane (42) et fermant un passage d'éperon (44) dans le support de membrane (42).

3. Dispositif de fermeture selon la revendication 2,
**caractérisé en ce que**
le boîtier (6) présente un perçage d'aération (47) au niveau d'une enveloppe (46) du support de membrane (42), un joint (48) étant disposé entre le support de membrane (42) et le boîtier (6) dans une découpe de l'enveloppe (46) du support de membrane (42), ladite découpe étant située d'un côté du perçage d'aération (47) distant de la membrane de fermeture (5).

4. Dispositif de fermeture selon l'une des revendications précédentes,
**caractérisé en ce que**
l'éperon d'ouverture (12) est disposé du côté sortie (4) du dispositif de fermeture (1).

5. Dispositif de fermeture selon l'une des revendications précédentes,
**caractérisé en ce que**
l'éperon d'ouverture (12) présente au moins une pointe (15) dirigée vers la membrane de fermeture (5).

6. Dispositif de fermeture selon l'une des revendications précédentes,
**caractérisé en ce que**
l'éperon d'ouverture (12) présente sur sa périphérie au moins une rainure (16), la ou les rainures (16) étant disposées dans la direction du déplacement de l'éperon d'ouverture (12), et dans le cas où il y a plusieurs rainures (16), celles-ci sont disposées à équidistance sur la périphérie de l'éperon d'ouverture (12).

7. Dispositif de fermeture selon l'une des revendications précédentes,
**caractérisé en ce que**
le dispositif d'actionnement (11) comprend une broche de réglage (19) pouvant être entraînée en rotation et un écrou de broche (20) coopérant avec ladite broche de réglage (19), guidé longitudinalement et portant l'éperon d'ouverture (12), l'écrou de broche (20) étant guidé longitudinalement dans le boîtier (6) du dispositif de fermeture (1).

8. Dispositif de fermeture selon la revendication 7,
**caractérisé en ce que**
le dispositif d'actionnement (11) comprend un moteur d'entraînement (23) électrique, la broche de réglage (19) étant entraînée par le moteur d'entraînement (23).

9. Dispositif de fermeture selon l'une des revendications précédentes,
**caractérisé en ce que**
l'éperon d'ouverture (12) est guidé dans le boîtier (6) du dispositif de fermeture (1), des capteurs de position (26, 27, 28) étant disposés de manière fixe dans le boîtier (6) dans la zone du guidage de l'éperon d'ouverture (12) et coopérant avec un indicateur de position mobile avec l'éperon d'ouverture (12), l'indicateur de position étant un aimant (29) et les capteurs de position (26, 27, 28) étant des capteurs à effet Hall.

10. Dispositif de fermeture selon la revendication 9,
**caractérisé en ce que**
trois capteurs de position (26, 27, 28) sont disposés en une rangée, le capteur de position central (26) correspondant à un état au repos du dispositif de fermeture (1) où la membrane de fermeture (5) est intacte.

11. Dispositif de fermeture selon l'une des revendications 7 à 10,
**caractérisé en ce que**
l'écrou de broche (20) est guidé par sa périphérie dans le boîtier (6), un joint étant disposé sur la périphérie de l'écrou de broche (20), ledit joint étant une bague d'étanchéité (25) périphérique.

12. Dispositif de fermeture selon l'une des revendications précédentes,
**caractérisé en ce que**
l'éperon d'ouverture (12) est disposé dans la chambre de pression (8), laquelle présente une ouverture de raccordement (9, 10), ladite ouverture de raccordement (9, 10) et la membrane de fermeture (5) se situant dans des plans sécants.

13. Torpille comportant au moins un accumulateur de pression (2) destiné à alimenter des dispositifs de la torpille actionnés pneumatiquement et doté d'un dispositif de fermeture (1) selon l'une des revendications précédentes pour l'accumulateur de pression (2).

14. Utilisation d'un dispositif de fermeture selon l'une des revendications 1 à 12 pour fermer l'accumulateur de pression (2) d'une torpille.
